# EUROPEAN PATENT APPLICATION

(11) **EP 2 978 206 A1**
(43) Date of publication of application: **27.01.2016**
(21) Application number: 15175970.1
(22) Date of filing: 08.07.2015
(51) Int. Cl.: H04N 5/225, G03B 5/04, G02B 27/64, G08B 13/196

(54) **IMAGE BASED SURVEILLANCE SYSTEM**

(30) Priority: 21.07.2014 US 201414336166
(71) Applicant: Honeywell International Inc., Morris Plains, NJ 07950 (US)
(72) Inventor: WU, Di, Morristown, NJ New Jersey 07962-2245 (US); ZHAO, Jie, Morristown, NJ New Jersey 07962-2245 (US)
(74) Representative: Houghton, Mark Phillip

(57) **Abstract**

An apparatus including an imaging array of a surveillance camera with a center of the imaging array located around a central imaging axis with a field of view of the imaging array extending outwards parallel to the imaging axis and a wide-angle lens having a central axis of light transmission, the lens focusses light passing through the lens symmetrically around the central axis wherein a central portion of the wide-angle lens located around the central axis of the lens is offset with respect to the center of the imaging array towards an upper or lower part of the imaging array thereby enlarging distal image details of the field of view detected by the imaging array.

## Description

### FIELD

This application relates to security systems and more particular to surveillance systems.

### BACKGROUND

Systems are known to protect people and assets within secured areas. Such systems are typically based upon the use of one more sensors that detect threats within the secured area.

Threats to people and assets may originate from any of number of different sources. For example, an unauthorized intruder, such as a burglar may present a threat to assets within a secured area. Intruders have also been known to injure or kill people within secured areas.

Intruders may be detected via a combination of active and passive devices. For example, intruders may be detected via switches placed on the doors or windows of a secured area. Alternatively, the area may be monitored via passive infrared (PIR) detectors and/or security cameras.

In many areas, such as airports or public buildings, it is impractical to automate the detection and reporting of threats. In these situations, one or more guards in a security center may monitor the secured area via a number of security cameras located throughout the area. In many cases, a number of cameras are used that allow a guard to scrutinize the secured area in more detail. Limit switches or PIR detectors may be used in more secure areas to alert a guard to the presence of possible problems and to prompt a guard to train the nearest camera on a source of the problem.

While security cameras work well, their use is often limited by the situation and camera used. For example, in large areas, cameras with wide-angle lens may be used. However, a wide-angle lens can distort an image making it hard to appreciate the full scope of a situation. Accordingly, a need exists for methods of overcoming the deficiencies of distortion.

### BRIEF DESCRIPTION OF THE DRAWINGS

FIG. 1 illustrates a block diagram of a security system in accordance herewith;
FIG. 2 depicts a camera that may be used with the security system of FIG. 1;
FIG. 3 depicts a map of magnification and distortion across an image circle of a wide-angle lens that may be used with the system of FIG. 1;
FIG. 4 depicts an image circle created by a lens overlaid on an image array for a normal camera and a camera with an offset lens;
FIG. 5 is an image layout of near and far areas for a wall mounted camera;
FIG. 6 depicts an illumination distribution of near and far areas of an image array caused by offsetting the lens;
FIG. 7 depicts an optical resolution distribution of near and far areas of an image array caused by offsetting the lens;
FIG. 8 is an example of a viewing area of a camera of FIG. 1; and
FIG. 9 is an example of object magnification caused by offsetting of the lens of FIG. 1.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

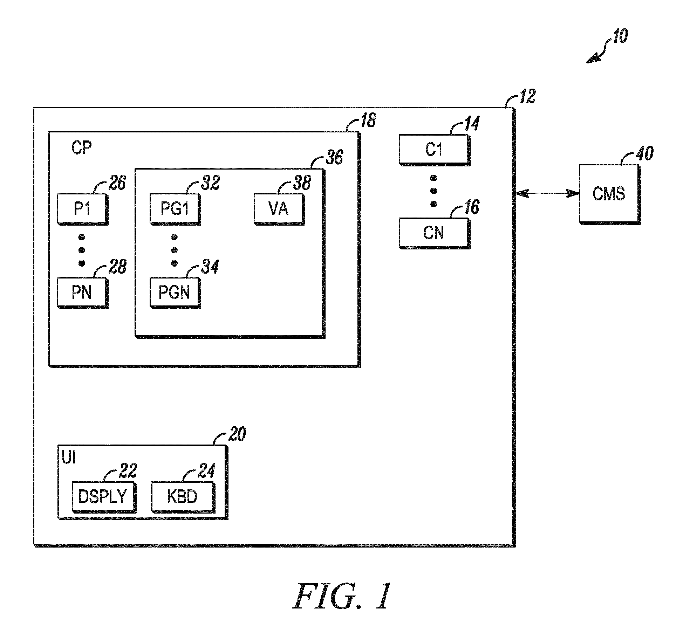

FIG. 1 depicts a security system 10 shown generally in accordance with an illustrated embodiment. Included within the system may be a number of surveillance cameras 14, 16 that detect threats within a secured area 12.

The security system may include a control panel 18 and a user interface 20. The control panel and/or user interface may be located within the secured area (as shown in FIG. 1) or located remotely.

The user interface may be used by a human guard at a guard's station to monitor each of the cameras. In this regard, images from the cameras may be shown on a display 22. Selection of the camera for the display of images at the guard station may be accomplished via instructions entered through a keyboard 24 that is separate from the display or via a touchscreen display where the keyboard and display are combined.

The control panel may monitor the cameras and/or user interface for threats. Upon detecting a threat, the control panel may send an alarm message to a central monitoring station 40. The central monitoring station may respond by summoning help (e.g., fire department, police, etc.).

Included within the control panel may be one or more processor apparatus (processors) 26, 28, each operating under control of one or more computer programs 32, 34 loaded from a non-transitory computer readable medium (memory) 36. As used herein reference to a step of a program is also reference to the processor that executed that step.

The control panel may include at least one camera control processor that monitors the keyboard of the user interface for instructions from a user. Upon detecting an identifier of a camera, a video processor may collect video frames from one or more of the cameras and sequentially display the frames on the display of the user interface.

A video processor may also save video from each of the cameras into a video file 38. The video may be saved along with an identifier of the camera, a location and a time stamp associated with each frame indicating when the frame was captured.

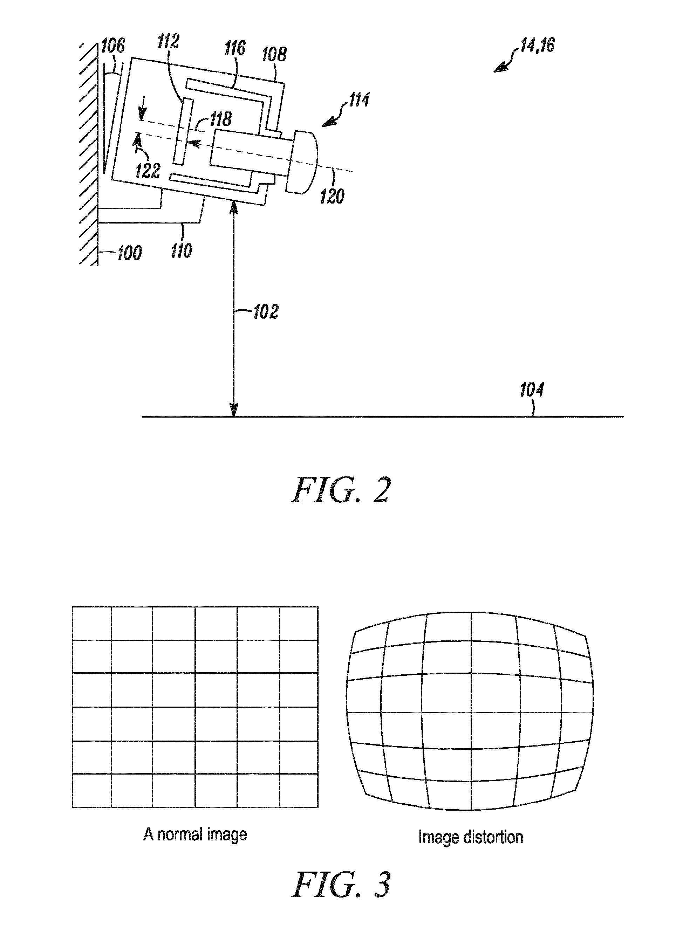

FIG. 2 depicts an example of one of the cameras shown in FIG. 1. As shown, each of the cameras may be supported by a wall 100. The camera may be mounted a predetermined distance 102 from the floor 104. The camera may be tilted downwards at a predetermined angle 106 towards the floor.

The camera may include a housing 108 that is supported by a wall bracket 110. The wall bracket may be adjustable to allow the vertical tilt and horizontal direction to be optimized by an installer.

The camera includes an image sensor or array 112 supported by the housing. A lens (e.g., a wide-angle lens) 114 focusses incoming light upon the array. The lens is supported by the housing via a lens holder 116.

In general, the image array has a center axis 118 extending outwards from the image array. The center axis defines the direction of a field of view of the image array. The field of view surrounds the central axis of the array and extends away from the array parallel to the axis.

The lens functions to alter a perspective and magnification of the field of view. In this regard, the lens has a center axis 120 of light transmission. The path of light traveling through the lens is altered symmetrically around the axis of transmission by the optical properties of the lens.

A wide-angle lens allows nearby objects to appear very large and objects at a moderate distance appear small and far away. FIG. 3 illustrates these effects. As shown in FIG. 3 image details located at the center are enlarged while image details located along the periphery are compressed and distorted.

Under the illustrated embodiment shown in FIG. 2, the imaging axis 118 is parallel to the axis of transmission 120. However, the imaging axis 118 is offset by a predetermined distance (e.g., a few millimeters) 122 from the axis of light transmission 120 of the lens.

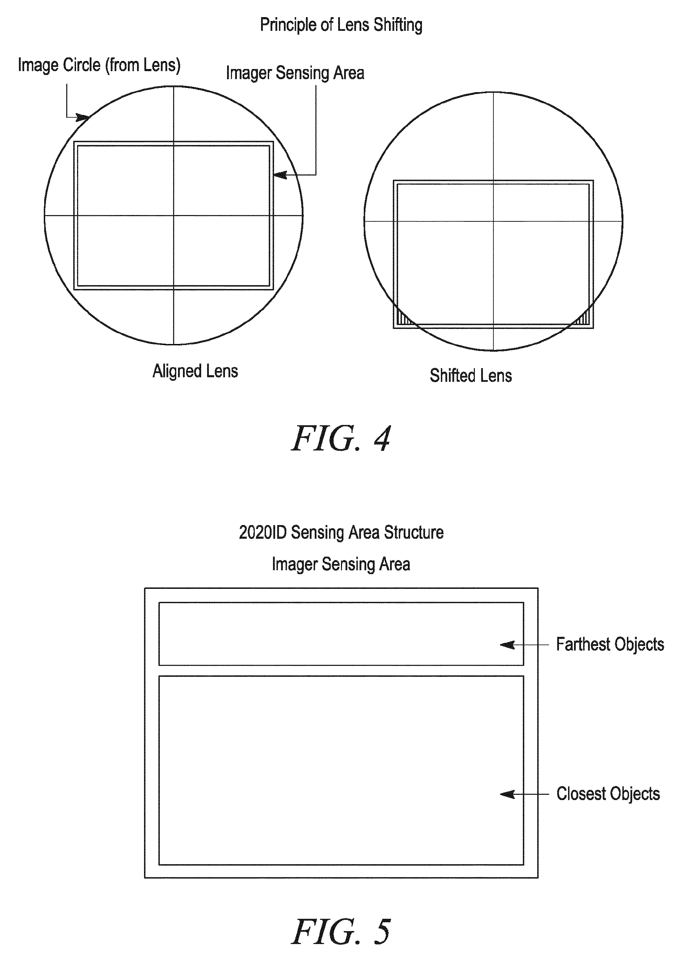

FIG. 4 illustrates the effect of shifting the center of the lens with respect to the center of the imaging array. The left image of FIG. 4 shows a conventional sensor array and lens (without any offset). In a conventional lens/array arrangement, an active area of the image sensor is concentric with the image circle created by the lens. As shown in the right side of FIG. 4, the offsetting of the lens shifts the magnification and distortion of the image detected by the image array.

FIG. 5 illustrates the distribution of image details from a scene within a field of view on the image array of the camera shown in FIG. 2. As shown, the top portion of the image array detects image details that are furthest from camera while the bottom portion detects details that are closer to the camera. This is because, since the camera is angled downwards, the top portions shows the far or distal end of a room while the bottom portion shows the details directly beneath the camera. By comparing the contents of FIGs. 3-5, it should be apparent that shifting the centerline of the lens versus the center of the imaging array causes the distal image details from the far end of the room to be magnified when compared to image details in front of or directly below the camera.

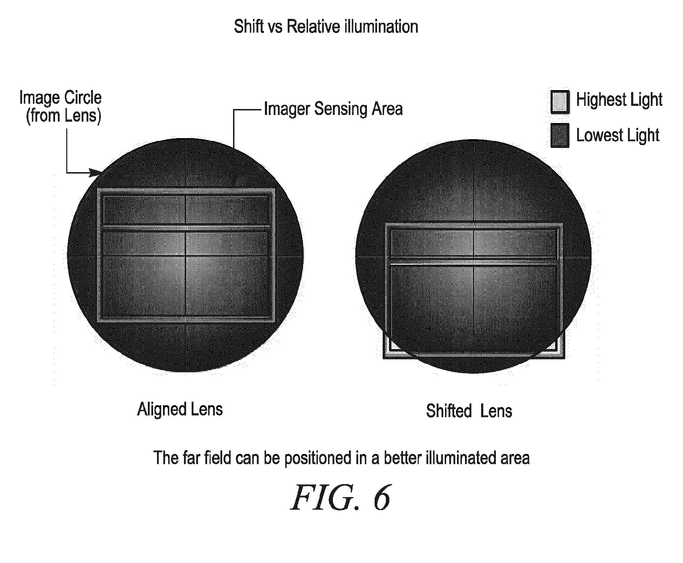

FIG. 6 shows additional benefits from the offsetting of the centers of the lens and image array. As shown on the left of FIG. 6, a conventional lens/array combination focuses light passing through the lens in the center of the image array. In contrast, the figure shown on the right side of FIG. 6 shows that the offset centers allows more light from distal image details to be focused onto the image array.

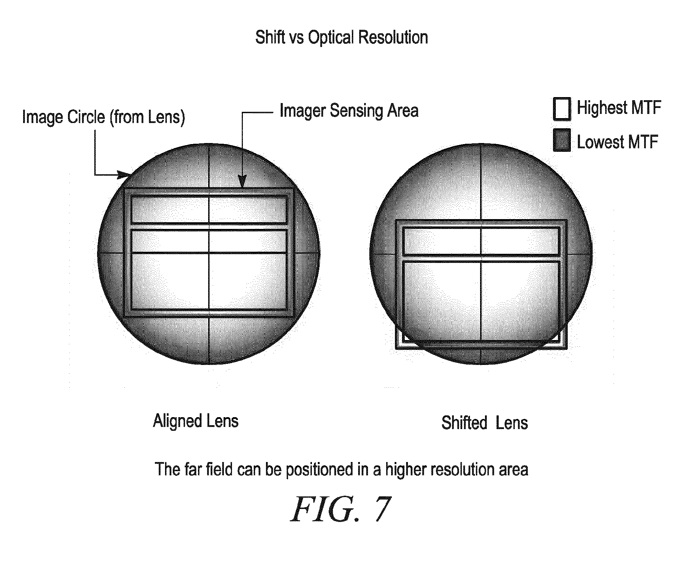

FIG. 7 shows additional benefits from the offsetting of the centers of the lens and image array. As shown on the left of FIG. 7, a conventional lens/array combination causes the best resolution in the center of the image array. In contrast, the figure shown on the right side of FIG. 7 provides greater resolution to distal image details.

The offsetting of the centers of the image array and lens also results in a lower camera angle with respect to the floor. For example, a camera previously mounted at a look down angle of 42.5 degrees can be reduced to a 15 degree look down angle when the lens is offset with respect to the imaging array.

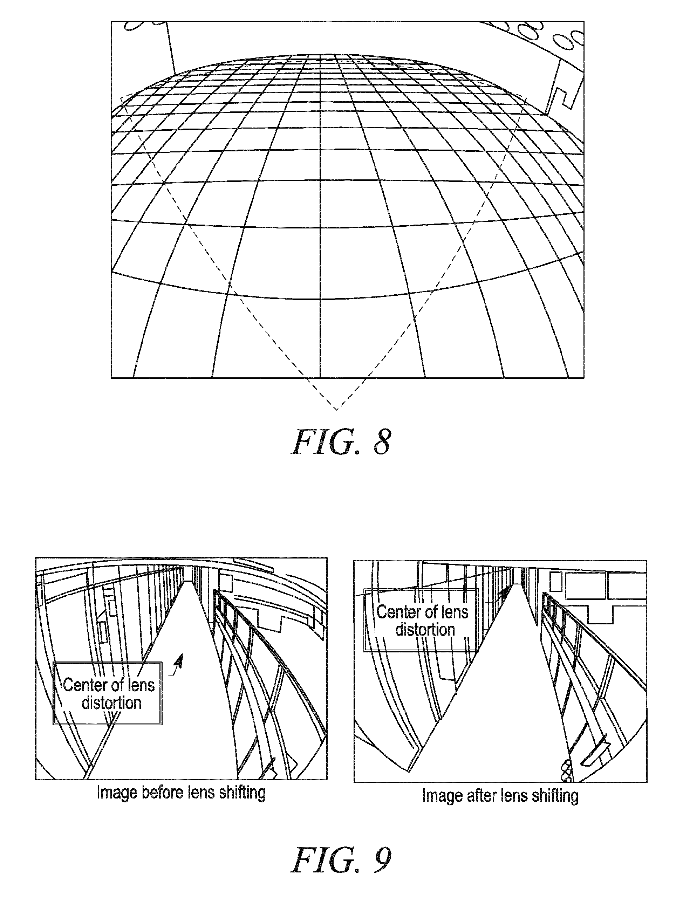

FIG. 8 depicts an area monitored by a surveillance camera. The area monitored is often fan shaped and in FIG. 8 is marked by a line extend outwards from the camera in the image. A suspicious object appearing on the far (distal) end of this area would be very small in the image. As such, it would be very difficult to discriminate the identity of this object either via the human eyes of a guard or by a computer algorithm. Moreover, the lens of conventional surveillance cameras, by necessity, are often wide-angled in order to cover the greatest possible area. A wide-angle lens usually creates significant image distortion extending across the details of the image. If an object is near the edge of the image, its size would be compressed because of the inherent distortion of wide-angle lenses. The far end of the monitored area of FIG. 8 is at the greatest distance from the camera and is near the upper edge of the image. The reduction of the object size aggravates the difficulty in identifying any objects along the upper edges.

One way of solving the problem of distortion along the top of an image is to replace the image sensor with a sensor of a higher resolution. Through this method, a suspicious object would occupy more pixels in the image, so that the image would provide more information useful in identifying the object. However, this method increases the cost of the camera.

Under illustrated embodiments described herein, the lens is shifted with respect to the image sensor, so that the center of the distortion (the area of greatest magnification) is placed near the upper edge of the image. A small amount of image information is shifted off the sensor on the top while additional image information is shifted onto the sensor from the bottom. However, the area of image information shifted onto the sensor is larger than the amount shifted off, so the field of view (FOV) of the camera would become a little larger than before. After the lens shift, an object in the far end of the monitored area becomes bigger, because it is nearer to the distortion center. Meanwhile, an object in the near end of the monitored area would become smaller than before. Nevertheless, the reduction in the size of the nearby object would not make it difficult to recognize this object, because the object would be directly below the camera and its size would still be relatively large.

Shifting of the lens with respect to the image array may cause some darkening of the bottom left and right corners of the image, especially if the lens is shifted too much. However, this is still acceptable in most surveillance camera applications. The reason is obvious. Although, there are two dark corners in the image, the area that the camera covers is actually enlarged. Because the size of the objects near the bottom of the image are larger and only shrink a small amount due to the lens distortion, they are still generally recognizable.

FIG. 9 depicts an example of lens shifting. The example on the left side of FIG. 9 shows a camera with an unshifted lens. In this case, the center of the lens circle (i.e., the area of greatest magnification surrounded by the distorted outside edges) is located in the center of the image. In the case of the shifted or offset lens (shown on the right side of FIG. 9) the center of the lens distortion (area of greatest magnification) is shifted upwards and is then located along the upper edge of the image. In the example of FIG. 9, the object found at the far end of the hall on the right side of FIG. 9 is 25% larger than that same object shown on the left side of FIG. 9.

In general, the apparatus described herein includes an imaging array of a surveillance camera with a center of the imaging array located around a central imaging axis with a field of view of the imaging array extending outwards parallel to the imaging axis and a wide-angle lens having a central axis of light transmission, the lens focusses light passing through the lens symmetrically around the central axis wherein a central portion of the wide-angle lens located around the central axis of the lens is offset with respect to the center of the imaging array towards an upper or lower part of the imaging array thereby enlarging distal image details of the field of view detected by the imaging array.

Alternatively, the apparatus include a housing, an imaging array supported by the housing, the imaging array has a central imaging axis located at a center of the imaging array with a field of view of the imaging array extending outwards parallel to the imaging axis and a wide-angle lens directly adjacent the imaging array having a central axis of light transmission, the lens focusses light passing through the lens symmetrically around the central axis onto the imaging array wherein a center portion of the lens surrounding the central axis is offset with respect to the center of the imaging array thereby increasing an illumination level of distal image details and enlarging the distal image detail detected by the imaging array.

Alternatively, the apparatus includes a surveillance camera with a field of view that captures distant image details along a top edge of an image from the camera and close-up image details along a bottom edge of an image from an area directly below the surveillance camera, an imaging array of the surveillance camera, the imaging array has an imaging axis centrally located with a center portion of a field of view of the imaging array, the imaging axis extends outwards around the central imaging axis parallel to the imaging axis and a wide-angle lens having a central axis of light transmission, the lens focusses light passing through the lens symmetrically around the central axis wherein a center portion that surrounds the central axis of the lens is offset with respect to the center of the imaging array thereby enlarging the distant image details captured by the imaging array.

From the foregoing, it will be observed that numerous variations and modifications may be effected without departing from the spirit and scope hereof. It is to be understood that no limitation with respect to the specific apparatus illustrated herein is intended or should be inferred. It is, of course, intended to cover by the appended claims all such modifications as fall within the scope of the claims. Further, logic flows depicted in the figures do not require the particular order shown, or sequential order, to achieve desirable results. Other steps may be provided, or steps may be eliminated, from the described flows, and other components may be add to, or removed from the described embodiments.

## Claims

1. An apparatus comprising:
an imaging array of a surveillance camera with a center of the imaging array located around a central imaging axis with a field of view of the imaging array extending outwards parallel to the imaging axis; and
a wide-angle lens having a central axis of light transmission, the lens focusses light passing through the lens symmetrically around the central axis wherein a central portion of the wide-angle lens located around the central axis of the lens is offset with respect to the center of the imaging array towards an upper or lower part of the imaging array thereby enlarging distal image details of the field of view detected by the imaging array.

2. The apparatus as in claim 1 further comprising a wall-mounted enclosure that supports the imaging array and wide-angle lens.

3. The apparatus as in claim 1 wherein the wall-mounted enclosure that supports the imaging array and wide-angle lens further comprises a wall bracket that directs that imaging array and wide-angle lens downward.

4. The apparatus as in claim 1 wherein the central imaging axis of the imaging array and central axis of the wide-angle lens further comprises a mutually parallel relationship.

5. The apparatus as in claim 1 further comprising a surveillance system.

6. An apparatus comprising:
a housing;
an imaging array supported by the housing, the imaging array has a central imaging axis centered within the imaging array with a field of view of the imaging array extending outwards parallel to the imaging axis; and
a wide-angle lens having a central axis of light transmission located directly adjacent the imaging array, the lens focusses light passing through the lens symmetrically around the central axis onto the imaging array wherein a center portion of the lens surrounding the central axis is offset with respect to the center of the imaging array thereby increasing an illumination level of distal image details and enlarging the distal image detail detected by the imaging array.

7. The apparatus as in claim 6 wherein the housing, imaging array and wide-angle lens further comprises a surveillance camera.

8. The apparatus as in claim 6 further comprising a wall bracket that supports the housing with the imaging array angled downwards towards a floor of a monitored space.

9. The apparatus as in claim 8 further comprising a lens holder that supports the wide-angle lens offset from the central imaging axis.

10. An apparatus comprising:
a surveillance camera with a field of view that captures distant image details along a top edge of an image from the camera and close-up image details from directly below the surveillance camera along a bottom edge of an image from an area;
an imaging array of the surveillance camera, the imaging array has an imaging axis centrally located within a center portion of a field of view of the imaging array, the field of view of the imaging array extends outwards around the central imaging axis parallel to the imaging axis; and
a wide-angle lens having a central axis of light transmission, the lens focusses light passing through the lens symmetrically around the central axis wherein a center portion that surrounds the central axis of the lens is offset with respect to the center of the imaging array thereby enlarging the distant image details captured by the imaging array.

11. The apparatus as in claim 10 further comprising a security system.

12. The apparatus as in claim 10 wherein the surveillance camera further comprises a housing that supports the imaging array and wide-angle lens.

13. The apparatus as in claim 10 further comprising an offset lens holder that supports the wide-angle lens via the housing.

## Amended claims

### Amended claims in accordance with Rule 137(2) EPC.

1. An apparatus comprising:
a surveillance camera;
an imaging array (112) of the surveillance camera with a center (118) of the imaging array located around a central imaging axis where the central axis defines a direction of a field of view of the imaging array; and
a wide-angle lens (114) of the surveillance camera, the wide-angle lens having a central axis (120) of light transmission, the lens focusses light passing through the lens symmetrically around the central axis wherein a central portion of the wide-angle lens located around the central axis of the lens is offset with respect to the center of the imaging array towards an upper or lower part of the imaging array thereby shifting a center of distortion and greatest magnification of the lens to the upper or lower part of the imaging array and enlarging distal image details of the field of view detected by the imaging array wherein a small amount of image information is shifted off the sensor on the top while additional image information is shifted onto the sensor from the bottom, where the area of image information shifted onto the sensor is larger than the amount shifted off, so the field of view of the camera becomes larger than before.

2. The apparatus as in claim 1 further comprising a wall-mounted enclosure that supports the imaging array (112) and wide-angle lens (114).

3. The apparatus as in claim 1 wherein the wall-mounted enclosure that supports the imaging array (112) and wide-angle lens (114) further comprises a wall bracket that directs that imaging array and wide-angle lens downward.

4. The apparatus as in claim 1 wherein the central imaging axis (118) of the imaging array (112) and central axis (120) of the wide-angle lens (114) further comprises a mutually parallel relationship.

5. The apparatus as in claim 1 further comprising a surveillance system.
